# EUROPEAN PATENT APPLICATION

(11) **EP 4 768 327 A1**
(43) Date of publication of application: **01.07.2026**
(21) Application number: 25227070.7
(22) Date of filing: 23.12.2025
(51) Int. Cl.: B60N 2/14, B60N 2/02, B60N 2/90

(54) **ROTARY DISK FRICTION LOCKING APPARATUS**

(30) Priority: 26.12.2024 CN 202411937559
(71) Applicant: Adient (Chongqing) Automotive Components Co., Ltd., Liangjiang New Area, Chongqing 401122 (CN)
(72) Inventor: CHEN, Zhiyong, Chongqing, Liangjiang New Area, 401122 (CN); ZHANG, Ming, Chongqing, Liangjiang New Area, 401122 (CN); LIN, Changfang, Chongqing, Liangjiang New Area, 401122 (CN); DU, Mengru, Chongqing, Liangjiang New Area, 401122 (CN); XIN, Yi, Chongqing, Liangjiang New Area, 401122 (CN)
(74) Representative: Liedtke & Partner Patentanwälte

(57) **Abstract**

Rotary disk friction locking apparatus, comprising a base (1) and a moving disk assembly (2) rotatably arranged on the base, the top of the moving disk assembly being used for mounting an automobile seat, a friction brake ring (3) being fixedly provided on the base, and a friction brake block (8) and a driving mechanism (A) that controls movement of the friction brake block being movably connected to the moving disk assembly; the friction brake block is arranged on an inner side or an outer side of the friction brake ring, the driving mechanism driving the friction brake block to move, which can force the friction brake block to frictionally join to a side part of the friction brake ring.

## Description

### Technical field

The present invention relates to the technical field of automobile seats, in particular to a rotary disk friction locking apparatus.

### Background art

With the continuous development of the automobile industry, market requirements for seats are increasingly higher; not only must the requirements of vehicle occupants for seat comfort be satisfied, but also the requirements of vehicle occupants for seat functionality must be satisfied, including a demand for rotating seats, and the rotating seat may satisfy various AC modes required by a client.

In the prior art, automobile seat rotation is mainly achieved by means of providing a rotary disk, wherein the rotary disk comprises a fixedly mounted base and a moving disk that is rotatably mounted on the top of the base, the automobile seat being fixedly mounted on the moving disk, a toothed disk being further provided on the base, an electric motor being provided on the moving disk, an output end of the electric motor being connected to a gear, the gear meshing with the toothed disk, and the driving electric motor operating, which achieves rotation of the moving disk.

However, due to the manufacturing process and the assembly process, a gap is present between the gear and a tooth plate, with the result that the seat wobbles when a vehicle occupant is seated, and such wobbling affects the comfort of sitting.

### Summary of the invention

In view of this, the present invention provides a rotary disk friction locking apparatus, intended to prevent a seat from wobbling.

To achieve the above objective, technical solutions of the present invention are as follows:
A rotary disk friction locking apparatus, comprising a base, and a moving disk assembly rotatably arranged on the base, the top of the moving disk assembly being used for mounting an automobile seat, wherein: a friction brake ring is fixedly provided on the base, and a friction brake block and a driving mechanism that controls movement of the friction brake block are movably connected to the moving disk assembly; the friction brake block is arranged on an inner side or an outer side of the friction brake ring, and the driving mechanism drives the friction brake block to move, which is able to force the friction brake block to frictionally join to a side part of the friction brake ring.

Using the structure described above, the friction brake block and the friction brake ring frictionally join to each other, such that frictional resistance can be used to form locking between the base and the moving disk, thereby effectively ensuring that a seat does not wobble.

Preferably: one end of the friction brake block is rotatably connected to the moving disk assembly, and the driving mechanism causes the friction brake block to frictionally join to the side part of the friction brake ring by driving the friction brake block to rotate. The structure described above provides the advantages of a simple structure, occupying little space and convenient friction locking control.

Preferably: the friction brake block is provided as two groups, the two groups of friction brake blocks being symmetrically arranged on an inner side of the friction brake ring, the driving mechanism comprising a sliding block that moves relative to the moving disk assembly, two linking pieces that are hinged to two ends of the sliding block and a transmission assembly that drives the sliding block to move, one end of each of the two linking pieces that is remote from the sliding block being respectively hinged to the two groups of friction brake blocks. Using the structure described above, with the design of two groups of friction brake blocks, by increasing the contact area between the friction brake blocks and the friction brake ring, it is ensured that locking of the base to the moving disk assembly is stabler, thereby ensuring that the seat does not wobble.

Preferably: the transmission assembly comprises an electric motor and a lead screw that is driven to rotate by the electric motor, and a middle part of the sliding block is fitted over the lead screw in a threaded connection. Using the structure described above, the electric motor drives the sliding block to slide on the lead screw, by which the friction brake block joins to the friction brake ring, and the operation is very convenient.

Preferably: the moving disk assembly comprises a moving disk and a mounting disk that is fixedly arranged on the top of the moving disk, the driving mechanism and the friction brake block both being arranged on the mounting disk. Using the structure described above, mounting of the driving mechanism to the friction brake block can be facilitated, and universality of the whole friction locking apparatus can also be ensured at the same time.

Preferably: the transmission assembly and the sliding block are both arranged on the top of the mounting disk, and the linking piece and the friction brake block are both arranged on the bottom of the mounting disk, the sliding block and the linking piece being hinged together by means of a first pin shaft, a first strip-shaped hole being provided on the mounting disk, the first pin shaft passing into the first strip-shaped hole, the linking piece and the friction brake block being hinged together by means of a second pin shaft, a second strip-shaped hole being provided on the mounting disk, the second pin shaft passing into the second strip-shaped hole, and one end of the friction brake block that is remote from the linking piece being rotatably mounted on the bottom of the mounting disk by means of a third pin shaft. Using the structure described above, when the sliding block moves on the lead screw, it can drive the linking piece to rotate around the second pin shaft, and the linking piece is further used to drive the friction brake block to pivot around the third pin shaft.

Preferably: the friction brake block is an arc-shaped block, and an outer periphery of the friction brake block is provided with a friction section that is adapted to an inner side of the friction brake ring. Using the structure described above, a contact area between the friction brake block and the friction brake ring is increased, further ensuring stable locking between the base and the moving disk assembly.

Preferably: a toothed ring is provided on the base, and the top of the mounting disk is provided with a driving electric motor, an output end of the driving electric motor being connected to a gear, and the gear and the toothed ring engaging with each other. Using the structure described above, it is ensured that the moving disk assembly can electrically rotate.

Preferably: an annular mounting cavity with an open upper end is provided on the base, two sides of an interior of the annular mounting cavity respectively forming an outer positioning ring groove and an inner positioning ring groove; the moving disk is rotatably connected to the interior of the annular mounting cavity, and the moving disk has an outer support ring located in the outer positioning ring groove and an inner support ring located in the inner positioning ring groove; a rotating support assembly is mounted both between upper and lower sides of the outer support ring and the outer positioning ring groove and between upper and lower sides of the inner support ring and the inner positioning ring groove. Using the structure described above, it is ensured that the moving disk can be rotatably supported on the top of the base, while also ensuring the rotation of the moving disk is smoother.

Preferably: in four groups of the rotating support assembly, three groups are ball structures, and the remaining group is a sliding friction structure, the sliding friction structure being arranged between the upper side of the inner positioning ring groove and the inner support ring. Using the structure described above, a combination of three groups of ball structures and one group of sliding friction structure ensures that the moving disk can be stably rotatably supported on the top of the base, while also increasing frictional resistance between the moving disk and the base by means of the sliding friction structure, further ensuring that the automobile seat does not wobble.

Compared to the prior art, beneficial effects of the present invention are:
1. Using the rotary disk friction locking apparatus provided by the present invention, by providing the friction brake ring and the friction brake block, frictional resistance between the two when fitted together can be used to form locking between the base and the moving disk assembly, thereby ensuring a seat does not wobble, and moreover, in a rotation process of the seat, the rotary disk friction locking apparatus further achieves emergency braking.
2. By means of the friction brake ring and the friction brake block locking, locking can be steplessly adjusted, ensuring that a seat can be locked at any angle.

### Brief Description of the Drawings

- Fig. 1: is a three-dimensional schematic drawing of a rotary disk friction locking apparatus;
- Fig. 2: is a structural schematic drawing showing a driving mechanism;
- Fig. 3: is a structural schematic drawing showing a mounting disk (with a sliding block hidden);
- Fig. 4: is a sectional view of a rotary disk friction locking apparatus;
- Fig. 5: is a partially enlarged view of Fig. 4;
- Fig. 6: is a partially enlarged view of Fig. 4 (with a rotating support assembly hidden);
- Fig. 7: is a structural schematic drawing of a friction sliding block (also called as friction brake block).

### Particular embodiments

The present invention is further described below in conjunction with embodiments and the figures.

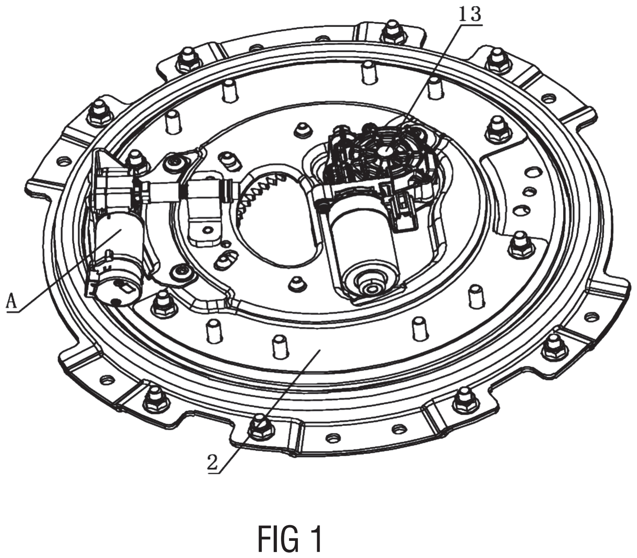

Figs. 1 to 6 show a rotary disk friction locking apparatus, comprising a base 1 and a moving disk assembly 2 that is rotatably mounted to the top of the base 1, wherein the base 1 is fixedly mounted on the bottom of an automobile or a seat sliding rail, and the top of the moving disk assembly 2 is used for fixedly mounting an automobile seat. A friction brake ring 3 is fixedly mounted on the base 1, and a friction brake block 8 and a driving mechanism A that controls movement of the friction brake block 8 are movably connected to the moving disk assembly 2, the friction brake block 8 being arranged on an inner side or an outer side of the friction brake ring 3, and the driving mechanism A driving the friction brake block 8 to move, which is able to force the friction brake block 8 to frictionally fit to a side part of the friction brake ring 3.

By means of the friction brake block 8 being driven by the driving mechanism A to frictionally join to a side part of the friction brake ring 3, frictional resistance between the friction brake block 8 and the friction brake ring 3 is used to form locking between the base 1 and the moving disk assembly 2, thereby ensuring an automobile seat does not wobble.

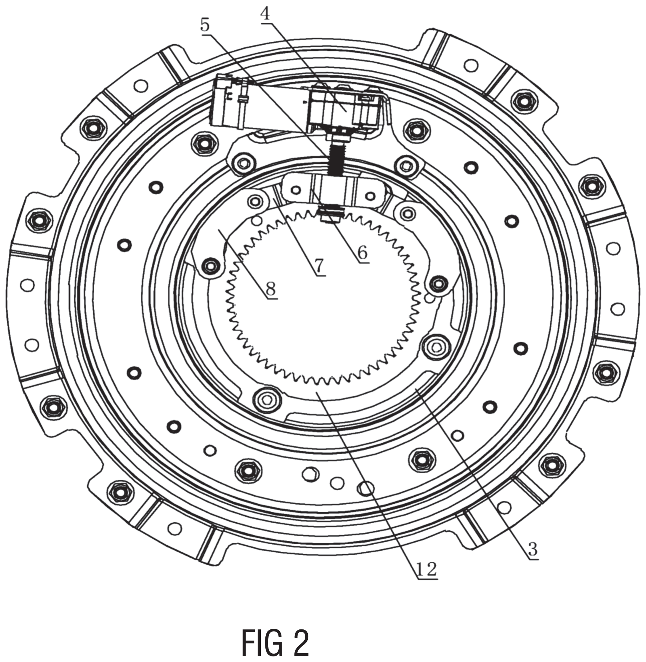

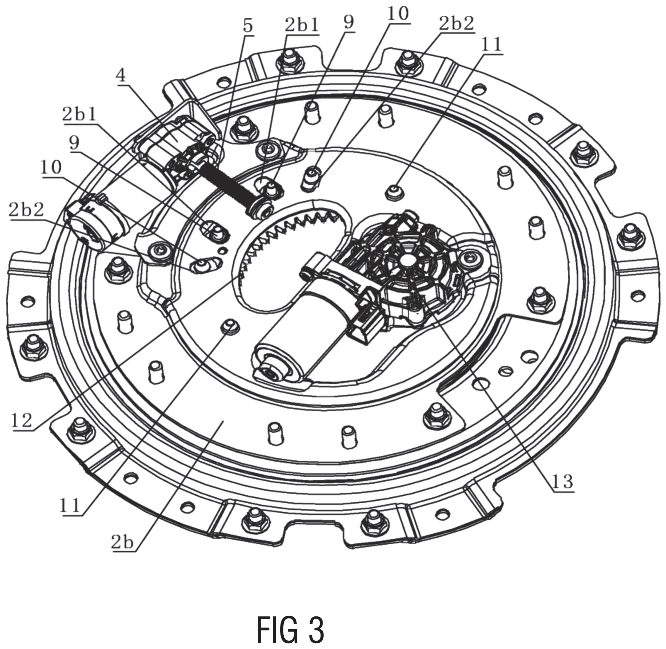

As shown in Figs. 2 and 3, one end of the friction brake block 8 is rotatably connected to the moving disk assembly 2, and the driving mechanism A causes the friction brake block 8 to frictionally join to the side part of the friction brake ring 3 by driving the friction brake block 8 to rotate.

Specifically, as shown in Fig. 2, in the present embodiment, two groups of friction brake blocks 8 are provided in total, the two groups of friction brake blocks 8 being symmetrically arranged on an inner side of the friction brake ring 3, the driving mechanism A comprising a sliding block 6 that moves relative to the moving disk assembly 2, two linking pieces 7 that are hinged to two ends of the sliding block 6 and a transmission assembly that drives the sliding block 6 to move, one end of each of the two linking pieces 7 that is remote from the sliding block 6 being respectively hinged to the two groups of friction brake blocks 8. With such a design, by increasing a contact area between the two groups of friction brake blocks 8 and the friction brake ring 3, it is ensured that locking of the base 1 to the moving disk assembly 2 is stabler.

Furthermore, the transmission assembly comprises an electric motor 4 and a lead screw 5 that is driven to rotate by the electric motor 4, and a middle part of the sliding block 6 is fitted over the lead screw 5 in a threaded connection.

In the present embodiment, the moving disk assembly 2 comprises a moving disk 2a and a mounting disk 2b that is fixedly mounted on the top of the moving disk 2a by means of a bolt, and the driving mechanism A and the friction brake block 8 are both mounted on the mounting disk 2b.

Specifically, as shown in Figs. 1 to 3, the transmission assembly and the sliding block 6 are mounted on the top of the mounting disk 2b, and the linking piece 7 and the friction brake block 8 are mounted on the bottom of the mounting disk 2b. The sliding block 6 and the linking piece 7 are hinged together by means of a first pin shaft 9, and a first strip-shaped hole 2b1 is formed on the mounting disk 2b, such that the first pin shaft 9 passes into the first strip-shaped hole 2b1; the linking piece 7 and the friction brake block 8 are hinged together by means of a second pin shaft 10, and a second strip-shaped hole 2b2 is further formed on the mounting disk 2b, such that the second pin shaft 10 passes into the second strip-shaped hole 2b2, and one end of the friction brake block 8 that is remote from the linking piece 7 is rotatably mounted on the bottom of the mounting disk 2b by means of a third pin shaft 11. With such a design, when the sliding block 6 moves on the lead screw 5, it is able to drive the linking piece 7 to pivot around the second pin shaft 10, and then by means of the linking piece 7, the friction brake block 8 is driven to pivot around the third pin shaft 11; the first pin shaft 9 passing into the first strip-shaped hole 2b1 can ensure that the sliding block 6 is able to move on the lead screw 5, rather than rotate together with the lead screw 5, when the electric motor 4 rotates, and the second pin shaft 10 passing into the second strip-shaped hole 2b2 ensures that the friction brake block 8 rotates.

By means of the above sliding block crank mechanism, a rotational force of the lead screw 5 can be amplified, such that locking of the friction brake block 8 is stabler.

Specifically, in conjunction with Fig. 2, when the sliding block 6 moves along the lead screw 5 toward a circle center of the mounting disk 2b, it is able to drive the linking piece 7 to pivot inwardly around the second pin shaft 10, and, at the same time, the linking piece 7 forces the friction brake block 8 to pivot outwardly around the third pin shaft 11, and, when the friction brake block 8 rotates outwardly and comes into contact with an inner side of the friction brake ring 3, under the effect of frictional resistance, locking can form between the base 1 and the moving disk 2a; when the automobile seat is in a rotating state, the rotary disk friction locking apparatus at this time realizes a vehicle braking function, and, when the automobile seat is in a prohibited state, the rotary disk friction locking apparatus at this time is able to ensure that the automobile seat does not wobble. When the sliding block 6 moves along the lead screw 5 away from the circle center of the mounting disk 2b, it is able to drive the linking piece 7 to pivot outwardly around the second pin shaft 10, and, at the same time, the linking piece 7 forces the friction brake block 8 to pivot inwardly around the third pin shaft 11; when the friction brake block 8 separates from the inner side of the friction brake ring 3, the whole rotary disk friction locking apparatus is in an unlocked state, and the automobile seat is able to rotate normally.

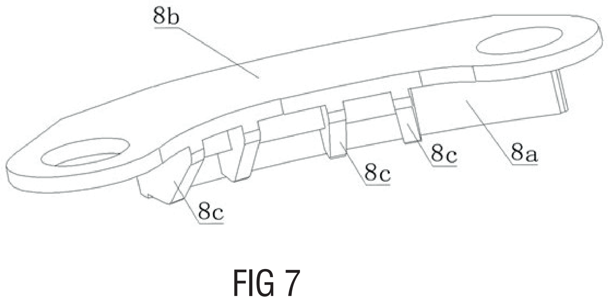

As shown in Fig. 7, in the present embodiment, the friction brake block 8 is constructed as an arc-shaped structure, and an outer periphery of the friction brake block 8 is formed to have a friction section 8a that is adapted to the inner side of the friction brake ring 3; the friction section 8a and the inner side of the friction brake ring 3 are able to form frictional resistance, so that locking is formed between the base 1 and the moving disk 2a. The friction brake block 8 further comprises a connecting section 8b, a connecting plate 8c being formed between the connecting section 8b and the friction section 8a; the connecting plate 8c enables the friction section 8a to be more structurally stable, while also causing the whole friction brake block 8 to be lighter, facilitating the sliding block 6 to drive the rotation thereof.

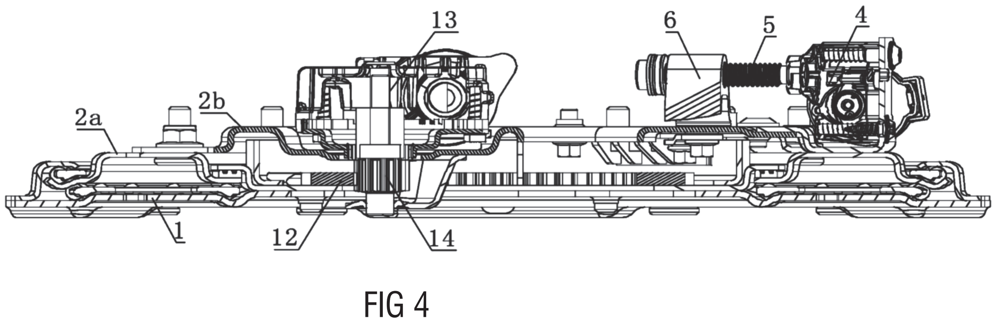

As shown in Figs. 2 and 4, a toothed ring 12 is fixedly mounted on the base 1, and in the present embodiment, the toothed ring 12 is an inner toothed ring, and a driving electric motor 13 is also fixedly mounted on the top of the mounting disk 2b, an output end of the driving electric motor 13 being connected to a gear 14, and the gear 14 and the toothed ring 12 being able to engage with each other; with such a design, the operation of the driving electric motor 13 is able to drive the gear 14 to rotate around the toothed ring 12, so that rotation of the automobile seat can be electrically controlled.

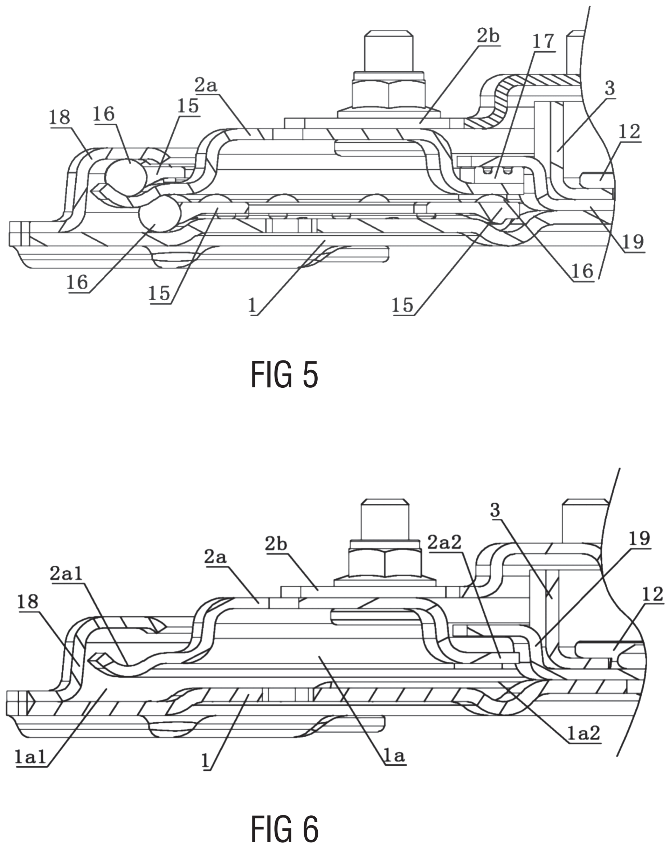

As shown in Figs. 5 and 6, an annular mounting cavity 1a with an open upper end is provided on the base 1, and two sides of an interior of the annular mounting cavity 1a respectively form an outer positioning ring groove 1a1 and an inner positioning ring groove 1a2; the moving disk 2a is rotatably mounted inside the annular mounting cavity 1a, and the moving disk 2a has an outer support ring 2a1 located in the outer positioning ring groove 1a1 and an inner support ring 2a2 located in the inner positioning ring groove 1a2; a rotating support assembly is mounted both between upper and lower sides of the outer support ring 2a1 and the outer positioning ring groove 1a1 and between upper and lower sides of the inner support ring 2a2 and the inner positioning ring groove 1a2. Such a design can ensure that the moving disk 2a is stably rotatably supported on the base 1.

Specifically, in the present embodiment, in four groups of rotating support assemblies, three groups are ball structures, and the remaining group is a sliding friction structure, the sliding friction structure preferably being arranged between the inner support ring 2a2 and the inner positioning ring groove 1a2 in the present embodiment; with such a design, a rotating support structure that is conventionally four groups of ball structures is replaced with a combination of three groups of ball structures and one group of sliding friction structure, which ensures that the moving disk 2a can be stably rotatably supported on the base 1, while eliminating a gap for the moving disk 2a to wobble by means of the sliding friction structure, further ensuring that the automobile seat does not wobble.

Further, the ball structure comprises a holding frame 15 that is fixedly mounted on the top of the base 1 and the top of the outer support ring 2a1, and a ball assembly 16 that is distributed in an annular arrangement on an outer periphery of the holding frame 15; in the present embodiment, three holding frames 15 are all annular structures, and the sliding friction structure is arranged on a friction block 17 that is between the upper side of the inner positioning ring groove 1a2 and the inner support ring 2a2; in the present embodiment, the friction block 17 is an arc-shaped block, and a total of four friction blocks 17 are mounted between the upper side of the inner positioning ring groove 1a2 and the inner support ring 2a2, the four friction blocks 17 being in an annular distribution, and the four friction blocks 17 all being a POM material; such a design enables the sliding friction structure to be lighter in weight and have better wear-resistance.

Further shown in Figs. 5 and 6, a first pressing ring 18 and a second pressing ring 19 are also fixedly mounted on the base 1, and a radius of the first pressing ring 18 is greater than a radius of the second pressing ring 19; an outer periphery of the first pressing ring 18 and an inner periphery of the second pressing ring 19 are both tightly adhered to the base 1 and fixedly mounted by means of a bolt; an outer positioning ring groove 1a1 is formed between an inner periphery of the first pressing ring 18 and the base 1, and an inner positioning ring groove 1a2 is formed between an outer periphery of the second pressing ring 19 and the base 1. Such a design can facilitate assembly of the whole moving disk 2a and the rotating support assembly. In addition, in the present embodiment, the friction brake ring 3 and the toothed ring 12 are both fixedly mounted on the inner periphery of the second pressing ring 19.

Finally, it must be explained that the above merely describes preferred embodiments of the present invention; a person skilled in the art may make various similar representations with the inspiration of the present invention without violating the purpose of the present patent application and the claims, and such transformations shall all fall within the scope of protection of the present patent application.

### List of References

- 1: base
- 1a: annular mounting cavity
- 1a1: outer positioning ring groove
- 1a2: inner positioning ring groove
- 2: moving disk assembly
- 2a: moving disk
- 2a1: outer support ring
- 2a2: inner support ring
- 2b: mounting disk
- 2b1: first strip-shaped hole
- 2b2: second strip-shaped hole
- 3: friction brake ring
- 4: electric motor
- 5: lead screw
- 6: sliding block
- 7: linking piece
- 8: friction brake block
- 8a: friction section
- 8b: connecting section
- 8c: connecting plate
- 9: first pin shaft
- 10: second pin shaft
- 11: third pin shaft
- 12: toothed ring
- 13: electric motor
- 14: gear
- 15: holding frame
- 16: ball assembly
- 17: friction block
- 18: first pressing ring
- 19: second pressing ring
- A: driving mechanism

## Claims

1. A rotary disk friction locking apparatus, comprising a base (1), and a moving disk assembly (2) rotatably arranged on the base (1), the top of the moving disk assembly (2) being used for mounting an automobile seat, wherein: a friction brake ring (3) is fixedly provided on the base (1), and a friction brake block (8) and a driving mechanism (A) that controls movement of the friction brake block (8) are movably connected to the moving disk assembly (2);
the friction brake block (8) is arranged on an inner side or an outer side of the friction brake ring (3), and the driving mechanism (A) drives the friction brake block (8) to move, which is able to force the friction brake block (8) to frictionally join to a side part of the friction brake ring (3).

2. The rotary disk friction locking apparatus as claimed in claim 1, wherein: one end of the friction brake block (8) is rotatably connected to the moving disk assembly (2), and the driving mechanism (A) causes the friction brake block (8) to frictionally join to the side part of the friction brake ring (3) by driving the friction brake block (8) to rotate.

3. The rotary disk friction locking apparatus as claimed in claim 1 or 2, wherein: the friction brake block (8) is provided as two groups, the two groups of friction brake blocks (8) being symmetrically arranged on an inner side of the friction brake ring (3), the driving mechanism (A) comprising a sliding block (6) that moves relative to the moving disk assembly (2), two linking pieces (7) that are hinged to two ends of the sliding block (6) and a transmission assembly that drives the sliding block (6) to move, one end of each of the two linking pieces (7) that is remote from the sliding block (6) being respectively hinged to the two groups of friction brake blocks (8).

4. The rotary disk friction locking apparatus as claimed in claim 3, wherein: the transmission assembly comprises an electric motor (4) and a lead screw (5) that is driven to rotate by the electric motor (4), and a middle part of the sliding block (6) is fitted over the lead screw (5) in a threaded connection.

5. The rotary disk friction locking apparatus as claimed in claim 4, wherein: the moving disk assembly (2) comprises a moving disk (2a) and a mounting disk (2b) that is fixedly arranged on the top of the moving disk (2a), the driving mechanism (A) and the friction brake block (8) both being arranged on the mounting disk (2b).

6. The rotary disk friction locking apparatus as claimed in claim 5, wherein: the transmission assembly and the sliding block (6) are both arranged on the top of the mounting disk (2b), and the linking piece (7) and the friction brake block (8) are both arranged on the bottom of the mounting disk (2b), the sliding block (6) and the linking piece (7) being hinged together by means of a first pin shaft (9), a first strip-shaped hole (2b1) being provided on the mounting disk (2b), the first pin shaft (9) passing into the first strip-shaped hole (2b1), the linking piece (7) and the friction brake block (8) being hinged together by means of a second pin shaft (10), a second strip-shaped hole (2b2) being provided on the mounting disk (2b), the second pin shaft (10) passing into the second strip-shaped hole (2b2), and one end of the friction brake block (8) that is remote from the linking piece (7) being rotatably mounted on the bottom of the mounting disk (2b) by means of a third pin shaft (11).

7. The rotary disk friction locking apparatus as claimed in claim 6, wherein: the friction brake block (8) is an arc-shaped block, and an outer periphery of the friction brake block (8) is provided with a friction section (8a) that is adapted to an inner side of the friction brake ring (3).

8. The rotary disk friction locking apparatus as claimed in one of the preceding claims 5 to 7, wherein: a toothed ring (12) is provided on the base (1), and the top of the mounting disk (2b) is provided with a driving electric motor (13), an output end of the driving electric motor (13) being connected to a gear (14), and the gear (14) and the toothed ring (12) engaging with each other.

9. The rotary disk friction locking apparatus as claimed in one of the preceding claims 5 to 8, wherein: an annular mounting cavity (1a) with an open upper end is provided on the base (1), two sides of an interior of the annular mounting cavity (1a) respectively forming an outer positioning ring groove (1a1) and an inner positioning ring groove (1a2);
the moving disk (2a) is rotatably connected to the interior of the annular mounting cavity (1a), and the moving disk (2a) has an outer support ring (2a1) located in the outer positioning ring groove (1a1) and an inner support ring (2a2) located in the inner positioning ring groove (1a2);
a rotating support assembly is mounted both between upper and lower sides of the outer support ring (2a1) and the outer positioning ring groove (1a1) and between upper and lower sides of the inner support ring (2a2) and the inner positioning ring groove (1a2).

10. The rotary disk friction locking apparatus as claimed in claim 9, wherein: in four groups of the rotating support assembly, three groups are ball structures, and the remaining group is a sliding friction structure, the sliding friction structure being arranged between the upper side of the inner positioning ring groove (1a2) and the inner support ring (2a2).
